# EUROPEAN PATENT APPLICATION

(11) **EP 4 685 116 A1**
(43) Date of publication of application: **28.01.2026**
(21) Application number: 24814141.8
(22) Date of filing: 10.05.2024
(51) Int. Cl.: C02F 1/24, C02F 1/40, C02F 1/38, C02F 103/10

(54) **DEVICE AND METHOD FOR TREATING GAS-BEARING OILFIELD PRODUCED WATER ON THE BASIS OF VERTICAL SHALLOW AIR FLOTATION**

(30) Priority: 01.06.2023 CN 202310635482
(71) Applicant: CNOOC (China) Co., Ltd, Tianjin 300459 (CN); CNOOC (China) Limited Beijing Research Center, Beijing 100028 (CN)
(72) Inventor: ZHANG, Jian, Tianjin 300459 (CN); WANG, Xiujun, Tianjin 300459 (CN); HUA, Zhao, Tianjin 300459 (CN); DU, Hong, Tianjin 300459 (CN); HOU, Shengzhen, Tianjin 300459 (CN); ZHAO, Chunhua, Tianjin 300459 (CN); JING, Bo, Tianjin 300459 (CN); CHEN, Jiaqing, Tianjin 300459 (CN); WANG, Hui, Tianjin 300459 (CN)
(74) Representative: Lorenz Seidler Gossel Part. mbB
(86) International application number: PCT/CN2024/092220
(87) International publication number: WO 2024/244940

(57) **Abstract**

Provided by the present application are a device and method for treating gas-bearing oilfield produced water on the basis of vertical shallow air flotation. The treatment device provided by the present application comprises a pressure stabilizing buffer tank, a dosing system, a primary tubular dissolved air releaser, a high-pressure vertical cyclone floating device, a secondary tubular dissolved air releaser, a low-pressure vertical shallow air flotation device, a slop oil tank, and a sludge tank. In the present application, tubular dissolved microbubble generation technology, air flotation separation technology, cyclone separation technology, shallow sedimentation strengthening separation technology and the like are organically combined, a large amount of dissolved air resources contained in produced water is effectively utilized, high-quality microbubble sources are provided for the high-pressure vertical cyclone flotation device and the low-pressure vertical shallow air flotation device by means of a pressure step release mode, efficient treatment of gas-bearing oilfield produced water is implemented, the treatment process of the gas-bearing oilfield produced water is greatly simplified, and treatment costs are reduced.

## Description

### Technical Field

The present invention relates to a device and method for treating gas-bearing oilfield produced water on the basis of vertical shallow air flotation, and falls within the technical field of treating gas-bearing oilfield produced water.

### Background Art

Gas-bearing oilfield produced water refers to oilfield produced water containing a large amount of dissolved gas, oil, solid suspended solids (SS), salts and organic matter, etc. In the conventional oilfield crude oil production and processing process, oil well produced liquid is required to be depressurized and settled by high-pressure and low-pressure three-phase separators to complete oil-gas-water three-phase separation. In this process, most of the dissolved gas is released and collected into the gas purification process, the crude oil after sedimentation and separation enters the subsequent crude oil treatment or transportation process, and the remaining produced water enters the subsequent water treatment process, and is discharged or reinjected to the standard after being treated by gravity sedimentation, gas floatation separation, filtration and membrane separation.

The above-mentioned existing processes mainly have the following three problems. (1) After decompression and energy dissipation by high-pressure and low-pressure three-phase separators, most of the dissolved gas in the produced water completes the decompression and release process, and the gas content in the produced water is very low. Therefore, when the subsequent produced water is subjected to gas floatation treatment, it is necessary to re-inject gas to generate fine enough bubbles to ensure the gas floatation separation efficiency, thus causing waste of resources. Also, the operation and maintenance costs of the gas injection system are high. (2) After the three-phase separator decompresses and dissipates energy, the water treatment process of the subsequent produced water is required to be equipped with a booster pump to pressurize the produced water to meet the operation requirements of the subsequent water treatment equipment, which causes a large amount of energy consumption. (3) In the existing water treatment process, the problems of long hydraulic retention time, large floor space and high energy consumption are common in the air flotation equipment, and the problems of large floor space, poor quality of bubble generation and high operation and maintenance costs also exist in the matched bubble generation device.

With the increasing water content of oil well produced water, the existing oilfield water treatment process is in full load and overload operation, which has been difficult to meet the increasingly stringent discharge or reinjection standards. Therefore, it is urgent to improve and innovate the existing treatment process of produced water in the gas-bearing oilfield.

Wang Yu-fang, et al., proposed an oilfield produced water treatment self-gas circulation air-floatation solid-liquid and liquid-liquid separation device in Chinese patent CN213895275U with the publication date of 6 August 2021. The process mainly includes an air-floatation separation tank, a dissolved air pump, a dissolved air tank and a recovery tank. In this process, the gas circulation system is formed by the dissolved air pump to realize the recycling of gas, which not only meets the requirement of oil removal, but also reduces the loss of gas source. However, this process is required to be equipped with the dissolved air pump and the gas reflux system, which has the problems of complex process, high energy consumption and high operation and maintenance costs. Jiang Chuansheng, et al., proposed a self-gas circulation multi-stage pressure-type dissolved gas flotation system in Chinese patent CN215592663U with the publication date of 21 January 2022, mainly including a primary gas flotation separation tank, a secondary gas flotation separation tank, an oil and gas recovery tank and a dissolved gas pipe. The process fully recycles the dissolved gas released from the incoming liquid, which not only meets the requirements of efficient oil removal, but also reduces the cost of producing a source of microbubbles. However, there are still some problems in the process, such as insufficient gas source, additional gas supply, and too much space occupied by the gas collection tank, which leads to the problem that the overall process structure is not compact enough and the cost of operation and maintenance is high.

### Summary of the Invention

It is an object of the present invention to provide a device and method for treating gas-bearing oilfield produced water on the basis of vertical shallow air flotation technology. The treatment device has the advantages of small floor space, low operation and maintenance cost, and so on. The treatment method for gas-bearing oilfield produced water by using this device has the advantages of simple process flow and high separation efficiency.

In order to achieve the above object, the present invention provides the technical solutions below.

A treatment device of gas-bearing oilfield produced water includes a pressure stabilizing buffer tank, a primary tubular dissolved air releaser, a high-pressure vertical cyclone floating device, a secondary tubular dissolved air releaser and a low-pressure vertical shallow air flotation device connected in sequence;
a liquid phase inlet of the pressure stabilizing buffer tank is connected to a water inlet pipeline of the gas-bearing oilfield produced water;
a dosing system is provided between the pressure stabilizing buffer tank and the primary tubular dissolved air releaser;
a slop oil outlet of the pressure stabilizing buffer tank, an oil outlet of the high-pressure vertical cyclone floating device and an oil outlet of the low-pressure vertical shallow air flotation device are respectively connected to the slop oil tank;
a slag discharge port of the high-pressure vertical cyclone floating device and a slag discharge port of the low-pressure vertical shallow air flotation device are respectively connected to the sludge tank;
an air outlet of the high-pressure vertical cyclone floating device and an air outlet of the low-pressure vertical shallow air flotation device are respectively connected to a gas transmission pipeline; and
a liquid outlet of the high-pressure vertical cyclone floating device and a liquid outlet of the low-pressure vertical shallow air flotation device are both connected to a water outlet pipeline.

Further, a vertical baffle of which the upper part is a grid structure is vertically provided at the bottom of the pressure stabilizing buffer tank, and the middle and lower space in the tank is divided into an inclined baffle region and a transverse baffle region;
wherein a micro-hole inclined baffle, a small-hole inclined baffle and a large-hole inclined baffle are successively provided in parallel from bottom to top in the inclined baffle region;
an outflow small-hole transverse baffle is provided at the upper part and an outflow large-hole transverse baffle is provided at the lower part in the transverse baffle region;
the upper end of the vertical baffle is horizontally provided with an oil separation plate, which vertically intersects with the vertical baffle and is connected to the side wall of the tank body;
a gas phase inlet and a gas phase outlet are provided at the top of the pressure stabilizing buffer tank;
a liquid phase inlet is provided at the lower part of a side wall of the inclined baffle region;
a liquid phase outlet is provided at the lower part of a side wall of the transverse baffle region; and
a slop oil outlet is provided at the upper part of the side wall of the transverse baffle region, and a top end of the slop oil outlet is tangentially connected to a bottom end of the oil separation plate.

Further, the diameter of the tank body of the pressure stabilizing buffer tank is D₁;
the distance between the vertical baffle and the vertical shaft axis of the pressure stabilizing buffer tank is D₁/6, and the plate length L is 5D₁/4;
the pore diameter d₁ of the micro-hole inclined baffle is 10 mm; the hole diameter d₂ of the small-hole inclined baffle is 30 mm; the pore diameter d₃ of the large-hole inclined baffle is 60 mm; the included angle between a single inclined baffle and the horizontal plane is 60°, and the spacing between each inclined baffle is D₁/6;
the pore diameter d₄ of the outflow small-hole transverse baffle is 30 mm, and the pore diameter d₅ of the outflow large-hole transverse baffle is 30 mm; and the spacing between the outflow small-hole transverse baffle and the outflow large-hole transverse baffle is D₁/4.

Further, the primary tubular dissolved air releaser and the secondary tubular dissolved air releaser both have a tubular multi-stage Venturi series structure; and the number of series stages of the Venturi tubes is controlled to be 2-5.

Further, the high-pressure vertical cyclone floating device includes a main separation tank, and the diameter of the tank body is D₂;
an oil overflow cover, an oil collecting cylinder and an evenly distributed cyclone inlet are successively provided from top to bottom in the main separation tank; the evenly distributed cyclone inlet extends to the outside of the main separation tank and is connected to the water inlet pipeline;
the upper part of the side wall of the main separation tank is provided with an oil outlet, and the bottom of the orifice of the oil outlet is tangentially connected to the bottom surface of the oil overflow cover;
an air outlet is provided at the top of the main separation tank;
a slag discharge port is provided at the axial center of the bottom of the main separation tank; and
a liquid outlet is provided at the bottom of the main separation tank at a distance of D₂/8 from the shaft axis.

Further, the low-pressure vertical shallow air flotation device includes a main separation tank, and the diameter of the tank body is D₃;
an oil overflow cover, an oil collecting inclined plate and a hollow cone platform are successively provided from top to bottom in the main separation tank;
the oil collecting inclined plate is composed of a plurality of hollow cone-shaped inclined plates stacked up and down. The included angle between the inclined angle of a single inclined plate and the horizontal plane are optimally set at 60°-65°. The diameter of the large end of the inclined plate is 0.7-0.9 times the inner diameter D₃ of the tank body of the low-pressure vertical shallow air flotation device. The diameter of the small end of the inclined plate is 0.3-0.5 times the inner diameter D₃ of the tank body of the low-pressure vertical shallow air flotation device. The vertical interval of the inclined plate is controlled at 40 mm-100 mm, and the number of the inclined plates is set at about 6-10 pieces;
an evenly distributed outlet is provided above and a flow equalizing plate is provided below the interior of the hollow cone platform;
the bottom axis of the hollow cone platform is provided with a slag discharge port, and extends to the outside of the bottom of the main separation tank;
an air outlet is centrally provided at the top of the main separation tank;
the upper part of the side wall of the main separation tank is provided with an oil outlet, and the bottom of the oil outlet is connected to a ground tangent plane of the oil overflow cover;
the lower part of the side wall of the main separation tank is provided with a liquid inlet, which is horizontally connected to the evenly distributed outlet; and
the bottom end of the main separation tank is provided with a liquid outlet.

The present invention also provides a method for treating gas-bearing oilfield produced water by the treatment device, including the steps of:
S1, subjecting the gas-bearing oilfield produced water to pressure stabilization in the pressure stabilization buffer tank, and after pressure stabilization treatment, adding a medicament and putting the mixture to the primary tubular dissolved air releaser;
S2, decompressing and releasing the dissolved gas in the gas-bearing oilfield produced water in the primary tubular dissolved air releaser to form microbubbles, and then filling the produced water rich in microbubbles into the high-pressure vertical cyclone floating device to generate a cyclone flow via an evenly distributed outlet;
   wherein during the flow process, the microbubbles, together with the oil droplets and the solid suspension, form an "oil droplet-bubble adhesive body" and a "solid suspension-bubble adhesive body", which move towards the center and float upwards through the oil outlet to the slop oil tank under the action of the cyclone centrifugal force; the gas phase is discharged into a gas transmission pipeline via the gas outlet; the solid phase settles and is discharged from the slag discharge port; the separated produced water enters the secondary tubular dissolved air releaser;
S3, releasing the produced water obtained from the treatment in the step S2 under reduced pressure in the secondary tubular dissolved air releaser, and producing a group of microbubbles for the second time, and filling the produced water rich in the group of microbubbles to the low-pressure vertical shallow air flotation device, the same flowing uniformly under the action of the flow equalizing plate;
   wherein, during the flow process, the microbubble group collides with the oil droplet and the solid suspension to form an "oil droplet-bubble adhesive body" and a "solid suspension-bubble adhesive body", and the oil droplet aggregates, coalesces and segregates under the action of shallow settlement; the treated enriched oil phase is discharged to the slop oil tank via the oil outlet; the gas phase is discharged to the gas transmission pipeline via the gas outlet; the solid phase settles and is discharged from the slag discharge outlet; and the treated produced water flows out of the liquid outlet and into the water outlet pipeline.

In the step S1, the hydraulic retention time in the pressure stabilizing buffer tank is controlled to be above 30 min, and the water pressure is 0.50-0.6 MPa; and the agent is one of polyaluminium chloride PAC, polyacrylamide PAM, and a water clarifier.

In the step S2, the water pressure of the outlet pipe section of the primary tubular dissolved air releaser is controlled to 0.30-0.35 MPa.

In the step S3, the water pressure of the outlet pipe section of the secondary tubular dissolved air releaser is controlled to 0.10-0.15 MPa.

### Brief Description of the Drawings

Fig. 1 is a process flow diagram of a device and method for treating gas-bearing oilfield produced water on the basis of vertical shallow air flotation technology according to the present invention.
Fig. 2 is a structurally schematic view of a pressure stabilizing buffer tank 2 in a treatment device according to the present invention.
Fig. 3 is a structurally schematic view of a high-pressure vertical cyclone flotation tank 8 in the treatment device according to the present invention.
Fig. 4 is a structurally schematic view of a low-pressure vertical shallow air flotation tank 13 in the treatment device according to the present invention.

Reference numerals: 1-high-pressure transport pipeline; 2-pressure stabilizing buffer tank; 3-dosing system; 4-high-pressure treatment pipeline; 5-primary tubular dissolved air releaser; 6-slag discharge pipeline; 7-slop oil transport pipeline; 8-high-pressure vertical cyclone floating device; 9-secondary tubular dissolved air releaser; 10-slop oil tank; 11-low-pressure treatment pipeline; 12-gas transmission pipeline; 13-low-pressure vertical shallow air flotation device; 14-water outlet pipeline; 15-sludge tank.
21-liquid phase inlet; 22-micro-hole inclined baffle; 23-small-hole inclined baffle; 24-large-hole inclined baffle; 25-vertical baffle; 26-oil separation plate; 27-gas phase inlet; 28-gas phase outlet; 29-slop oil outlet; 210-outflow small-hole transverse baffle; 211-outflow large-hole transverse baffle; 212-liquid phase outlet.
81-oil overflow cover; 82-oil outlet; 83-oil collecting cylinder; 84-evenly distributed cyclone inlet; 85-liquid inlet; 86-slag discharge port; 87-liquid outlet; 88-air outlet.
131-oil overflow cover; 132-oil outlet; 133-oil collecting inclined plate; 134-evenly distributed outlet; 135-hollow cone platform; 136-flow equalizing plate; 137-liquid inlet; 138-slag discharge port; 139-liquid outlet; 1310-air outlet.

### Detailed Description of the Invention

In order that the objects, aspects and advantages of the present invention will become more apparent, the technical solutions of the present invention will be described in detail below. It should be understood that the described embodiments are merely illustrative of some, but not all, embodiments of the present invention. All other embodiments of the invention that may be devised by those having ordinary skill in the art without departing from the spirit and scope of the present invention are deemed to be within the scope of the present invention.

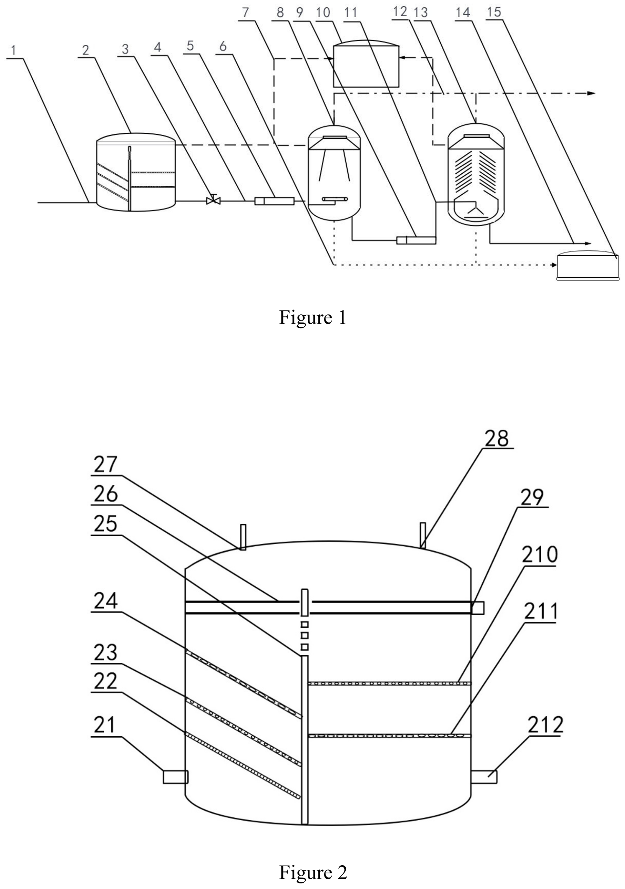

With reference to Figs. 1-4, a treatment device of gas-bearing oilfield produced water on the basis of vertical shallow air flotation technology includes the device units below:
a pressure stabilizing buffer tank 2, a dosing system 3, a primary tubular dissolved air releaser 5, a high-pressure vertical cyclone floating device 8, a secondary tubular dissolved air releaser 9, a slop oil tank 10, a low-pressure vertical shallow air flotation device 13 and a sludge tank 15;
wherein:
   the liquid phase inlet 21 of the pressure stabilizing buffer tank 2 is connected to a water inlet pipeline; the liquid phase outlet 212 of the pressure stabilizing buffer tank 2 communicates with the primary tubular dissolved air releaser 5 and the liquid inlet 85 of the high-pressure vertical cyclone floating device 8 via the high-pressure treatment pipeline 4 in sequence; the liquid outlet 87 of the high-pressure vertical cyclone floating device 8 communicates with the secondary tubular dissolved air releaser 9 and the liquid inlet 137 of the low-pressure vertical shallow air flotation device 13 via the low-pressure treatment pipeline 11 in sequence; the liquid outlet 139 of the low-pressure vertical shallow air flotation device 13 is connected to the water outlet pipeline 14;
   an injection port of the dosing system 3 is provided in the middle of the high-pressure treatment pipeline 4 between the pressure stabilizing buffer tank 2 and the primary tubular dissolved air releaser 5;
   an slop oil outlet 29 of the pressure stabilizing buffer tank 2, an oil outlet 82 of the high-pressure vertical cyclone floating device 8, and an oil outlet 132 of the low-pressure vertical shallow air flotation device 13 respectively communicate with the oil inlet of the slop oil tank 10 via the slop oil transport pipeline 7;
   the slag discharge port 86 of the high-pressure vertical cyclone floating device 8 and the slag discharge port 138 of the low-pressure vertical shallow air flotation device 13 respectively communicate with the inlet of the sludge tank 15 via the slag discharge pipeline 6; and
   the air outlet 88 of the high-pressure vertical cyclone floating device 8 and the air outlet 1310 of the low-pressure vertical shallow air flotation device 13 respectively communicate with the gas transmission pipeline 12.

Further, the pressure stabilizing buffer tank 2 employs a horizontal or vertical gravity settling tank. Taking the vertical gravity settling tank as an example, as shown in Fig. 2, the tank body diameter of the vertical gravity settling tank is D₁, and the tank body height H is 3D₁/2. A vertical baffle 25 is vertically provided at the bottom of the tank, the plate thickness δ₂ is 20 mm, and the plate length L is 5D₁/4. The distance between the vertical baffle and the vertical shaft axis of the tank body is D₁/6, and the middle and lower part of the tank body is divided into an inclined baffle region and a transverse baffle region. The upper part of the vertical baffle is a grid structure to ensure that the produced water in the inclined baffle region can flow to the transverse baffle region. A micro-hole inclined baffle 22, a small-hole inclined baffle 23 and a large-hole inclined baffle 24 are successively provided from bottom to top in the inclined baffle region. The pore diameter of the micro-hole inclined baffle 22 is d₁ = 10 mm, the pore diameter of the small-hole inclined baffle 23 is d₂ = 30 mm, and the pore diameter of the large-hole inclined baffle 24 is d₃ = 60 mm. Each inclined baffle is provided in parallel, the included angle with the horizontal is 60°, and the spacing of each inclined baffle is D₁/6. An outflow small-hole transverse baffle 210 and an outflow large-hole transverse baffle 211 are successively provided from top to bottom in the transverse baffle region. The pore diameter of the outflow small-hole transverse baffle 210 is d₄ = 30 mm, the pore diameter of the outflow large-hole transverse baffle 211 is d₅ = 30 mm, and the two transverse baffles are arranged in parallel, with the spacing being D₁/4. The upper end of the vertical baffle 25 is horizontally provided with an oil separation plate 26, which vertically intersects with the vertical baffle 25 and is connected to the side wall of the tank body. A gas phase inlet 27 and a gas phase outlet 28 are provided at the top of the vertical gravity settling tank. A liquid phase inlet 21 is provided at the lower part of the side wall of the tank body in the inclined baffle region. A liquid phase outlet 212 is provided at the lower part of the side wall of the tank body in the transverse baffle region. A slop oil outlet 29 is provided at the upper part of the side wall of the tank body in the transverse baffle region, and the top end of the slop oil outlet 29 is tangentially connected to the bottom end of the oil separation plate 26.

Further, the primary tubular dissolved air releaser 5 adopts a tubular multi-stage Venturi series structure, and the series number of Venturi tubes is controlled at 2-5. The secondary tubular dissolved air releaser 9 has the same structure as the primary tubular dissolved air releaser 5.

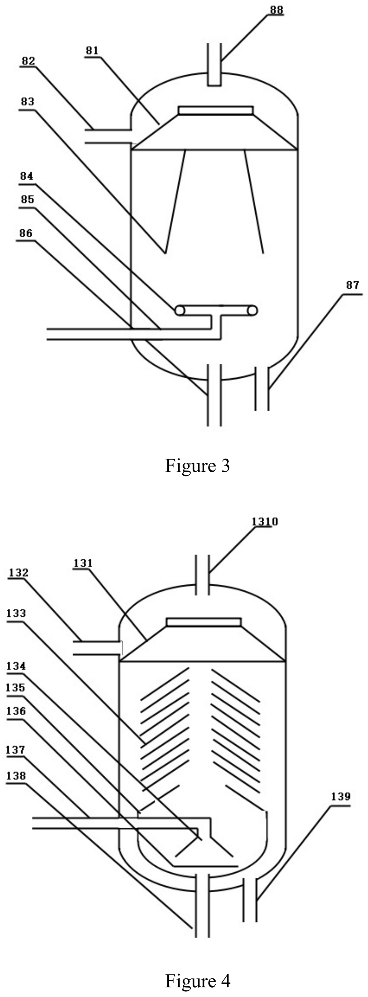

The high-pressure vertical type cyclone floating device 8 includes a main separation tank. As shown in Fig. 3, the diameter of the tank body is D₂, an oil overflow cover 81 is provided at the upper part inside the main separation tank, and an oil collecting cylinder 83 is provided below the oil overflow cover 81. The lower part of the oil collecting cylinder 83 is provided with an evenly distributed cyclone inlet 84, which extends to the outside of the main separation tank and is connected to the high-pressure treatment pipeline 4. The upper part of the side wall of the main separation tank is provided with an oil outlet 82, and the bottom of the orifice of the oil outlet 82 is connected to the bottom surface of the oil overflow cover 81 in a tangential manner. An air outlet 88 is provided at the top of the main separation tank. A slag discharge port 86 is provided at the shaft center of the bottom of the main separation tank. A liquid outlet 87 is provided at the bottom of the main separation tank at a distance of D₂/8 from the shaft axis.

Further, the low-pressure vertical shallow air flotation device 13 includes a main separation tank. The diameter of the tank body is D₃. An oil overflow cover 131, an oil collecting inclined plate 133 and a hollow cone platform 135 are successively provided from top to bottom in the main separation tank. The oil collecting inclined plate 133 is composed of a plurality of hollow cone-shaped inclined plates stacked up and down. The included angle between the inclined angle of a single inclined plate and the horizontal plane are optimally set at 60°-65°. The diameter of the large end of the inclined plate is 0.7-0.9 times the inner diameter D₃ of the tank body of the low-pressure vertical shallow air flotation device. The diameter of the small end of the inclined plate is 0.3-0.5 times the inner diameter D₃ of the tank body of the low-pressure vertical shallow air flotation device. The vertical interval of the inclined plate is controlled at 40 mm-100 mm, and the number of the inclined plates is set at about 6-10 pieces. An evenly distributed outlet 134 is provided at the upper part of the interior of the hollow cone platform 135, and a flow equalizing plate 136 is provided at the lower part of the interior. A slag discharge port 138 is provided at the center of the bottom of the hollow cone platform 135, and extends to the outside of the bottom of the main separation tank. An air outlet 1310 is provided at the center of top of the main separation tank. The upper part of the side wall of the main separation tank is provided with an oil outlet 132, and the bottom of the oil outlet 132 is connected to the ground tangent plane of the oil overflow cover 131. The lower part of the side wall of the main separation tank is provided with a liquid inlet 137, which is horizontally connected to the evenly distributed outlet 134. The bottom end of the main separator tank is provided with a liquid outlet 139, which is located at a distance D₃/8 from the vertical shaft axis of the tank body.

The treatment of gas-bearing oilfield produced water by the treatment device provided by the present invention may be carried out according to the steps below.
(1) The gas-bearing oilfield produced water is stabilized by the pressure stabilizing buffer tank 2, the hydraulic retention time is controlled above 30 min, and the internal water pressure should be kept at 0.50-0.6 MPa. The produced water after the pressure stabilization treatment flows into the high-pressure treatment pipeline 4 and is injected with a medicament via the dosing system 3. The pressure of the produced water in the high-pressure treatment pipeline 4 is about 0.5 MPa. The medicament is one of PAC, PAM, and a water clarifier, which can be adjusted according to the requirements of the oilfield to meet the requirements of the subsequent treatment process.
(2) The produced water added with the medicament enters the primary tubular dissolved air releaser 5, and the dissolved gas in the gas-bearing oilfield produced water is released in the form of microbubbles under reduced pressure and is mixed and dispersed sufficiently with the medicament to obtain a produced water rich in microbubbles. The water pressure at the outlet pipe section of the primary tubular dissolved air releaser is controlled to be 0.30-0.35 MPa, which is the water pressure at the liquid inlet of the high-pressure vertical cyclone floating device.
(3) After the produced water rich in microbubbles flows into the high-pressure vertical cyclone floating device 8, a stronger cyclone flow is generated by the evenly distributed cyclone inlet 84. The microbubbles with a lower density collide and adhere with oil droplets and solid suspension due to turbulent flow, forming the "oil droplet-bubble adhesive body" and the "solid suspension-bubble adhesive body", which have a centripetal migration tendency under the cyclone centrifugal force, and at the same time float upwards through the oil collecting cylinder 83 to rise to the vicinity of the upper liquid level in the tank by means of buoyancy, and finally overflow from the oil overflow cover 81 and discharge to the slop oil tank 10 via the oil outlet 82. The gas phase released from the upper liquid level in the tank is discharged into the gas transmission pipeline 12 via the air outlet 88. The solid phase impurities with a relatively large mass settle to the bottom of the tank body under the action of gravity and are discharged from the slag discharge port 86 at regular intervals.
   The produced water obtained by the separation flows out from the liquid outlet 87 of the high-pressure vertical cyclone floating device 8, and enters the secondary tubular dissolved air releaser 9 via the low-pressure treatment pipeline 11.
(4) The produced water obtained from the treatment in step (3) is treated by the secondary tubular dissolved air releaser 9, and is released under the reduced pressure to generate a microbubble group for the second time, and the water pressure is reduced to 0.10-0.15 MPa, which is the water pressure from the liquid inlet 137 of the low-pressure vertical shallow air flotation device 13.
(5) The produced water rich in the microbubble groups enters the low-pressure vertical shallow air flotation device 13, and flows uniformly under the action of the flow equalizing plate 136. In the flow process, the microbubble groups collide and adhere with the oil droplets and the solid suspension, forming the "oil droplet-bubble adhesive body" and the "solid suspension-bubble adhesive body", and the process that oil droplet aggregates, coalesces and segregates is intensified under the action of the shallow layer sedimentation, so as to realize the secondary high-efficiency treatment of the produced water.

The produced water obtained after the treatment flows out from the liquid outlet 139. The treated enriched oil phase finally overflows through the oil overflow cover 131, and is discharged to the slop oil transport pipeline 7 via the oil outlet 132. The continuous gas phase released in the upper part of the tank is discharged into the gas transmission pipeline 12 via the gas outlet 1310. The solid phase impurities with larger mass are settled to the bottom of the tank under the action of gravity and discharged periodically, and finally the high-efficiency separation of oil, gas, water and solid suspension is completed.

In this embodiment, the high-pressure vertical cyclone floating device 8 and the low-pressure vertical shallow air flotation device 13 are combined to carry out the air flotation pretreatment of the produced water in the gas-bearing oilfield. The cyclone flotation technology is used to remove oil droplets with larger particle size and part of gas, and then the vertical shallow air flotation device with the shallow settlement inclined plate is used to further enhance the removal process of dispersed oil and part of emulsified oil.

In the present embodiment, the microbubbles used in the flotation separation process of the high-pressure vertical cyclone floating device 8 and the low-pressure vertical shallow air flotation device 13 originate from the dissolution and release of natural gas from the gas-bearing oilfield produced water. Compared with the introduction of nitrogen and other external sources, the microbubbles formed by natural gas are easier to collide with oil droplets and adhere to each other, and the air flotation separation efficiency is higher, which greatly simplifies the process flow, reduces the system footprint and achieves efficient use of resources. Moreover, the whole high-pressure airtight operation reduces the emission of harmful gases, without secondary pollution, and ensures the safety and stability of the production site.

Of course, the treatment device of gas-bearing oilfield produced water on the basis of vertical shallow air flotation technology provided by the present invention is not limited to a single-stage operation such as the pressure stabilizing buffer tank 2, the high-pressure vertical cyclone floating device 8 and the low-pressure vertical shallow air flotation device 13. A two-stage or even a multi-stage series operation mode can be adopted according to actual needs. However, the liquid inlet, the oil outlet, the slag discharge outlet, the air outlet and the like of each stage of the pressure stabilizing buffer tank 2, the high-pressure vertical cyclone floating device 8 and the low-pressure vertical shallow air flotation device 13 are required to be in communication with a matched treatment pipeline or device.

While the invention has been described in detail in the foregoing general description and specific embodiments, it will be apparent to those skilled in the art that certain modifications or improvements can be made thereto without departing from the invention. Thus, it is intended that the present invention cover the modifications and variations of this invention provided they come within the scope of the appended claims and their equivalents.

This application claims priority to Chinese Patent Application No. 202310635482.7, filed on June 1, 2023, by the applicant CNOOC (China) Co., Ltd., and CNOOC Beijing Research Center, and entitled DEVICE AND METHOD FOR TREATING GAS-BEARING OILFIELD PRODUCED WATER ON THE BASIS OF VERTICAL SHALLOW AIR FLOTATION, the entire contents of which are incorporated herein by reference.

### Industrial application

The present application has the beneficial technical effects below.

The present invention makes full use of the dissolved gas resources contained in the gas-bearing oilfield produced water, and effectively controls the release process of dissolved gas from the produced water by means of pressure cascade release through coupling and coordinated dissolution and release of microbubble generation technology, gas floatation technology, cyclone separation technology and shallow settlement technology, so as to provide high-quality microbubble sources for the high-pressure vertical cyclone floating device and the low-pressure vertical shallow air floatation device, and realize the efficient oil removal, suspension removal and degassing of the gas-bearing oilfield produced water.

The whole treatment process has the advantages of high separation efficiency, simple process, compact structure and small footprint, which can effectively solve the problems of high energy consumption and low purification efficiency existing in the current treatment process of produced water in the gas-bearing oilfields, and help to achieve the development goals of energy saving and efficiency improvement in the oilfields.

## Claims

1. A treatment device of gas-bearing oilfield produced water, **characterized by** comprising a pressure stabilizing buffer tank, a primary tubular dissolved air releaser, a high-pressure vertical cyclone floating device, a secondary tubular dissolved air releaser and a low-pressure vertical shallow air flotation device connected in sequence;
wherein a liquid phase inlet of the pressure stabilizing buffer tank is connected to a water inlet pipeline;
a dosing system is provided between the pressure stabilizing buffer tank and the primary tubular dissolved air releaser;
a slop oil outlet of the pressure stabilizing buffer tank, an oil outlet of the high-pressure vertical cyclone floating device and an oil outlet of the low-pressure vertical shallow air flotation device are respectively connected to the slop oil tank;
a slag discharge port of the high-pressure vertical cyclone floating device and a slag discharge port of the low-pressure vertical shallow air flotation device are respectively connected to the sludge tank;
an air outlet of the high-pressure vertical cyclone floating device and an air outlet of the low-pressure vertical shallow air flotation device are respectively connected to a gas transmission pipeline; and
a liquid outlet of the high-pressure vertical cyclone floating device and a liquid outlet of the low-pressure vertical shallow air flotation device are both connected to a water outlet pipeline.

2. The treatment device according to claim 1, **characterized in that** a vertical baffle of which the upper part is a grid structure is vertically provided at the bottom of the pressure stabilizing buffer tank, and the middle and lower space in the tank is divided into an inclined baffle region and a transverse baffle region;
wherein a micro-hole inclined baffle, a small-hole inclined baffle and a large-hole inclined baffle are successively provided in parallel from bottom to top in the inclined baffle region;
an outflow small-hole transverse baffle is provided at the upper part and an outflow large-hole transverse baffle is provided at the lower part in the transverse baffle region;
the upper end of the vertical baffle is horizontally provided with an oil separation plate, which vertically intersects with the vertical baffle and is connected to the side wall of the tank body;
a gas phase inlet and a gas phase outlet are provided at the top of the pressure stabilizing buffer tank;
a liquid phase inlet is provided at the lower part of a side wall of the inclined baffle region;
a liquid phase outlet is provided at the lower part of a side wall of the transverse baffle region; and a slop oil outlet is provided at the upper part of the side wall of the transverse baffle region, and a top end of the slop oil outlet is tangentially connected to a bottom end of the oil separation plate.

3. The treatment device according to claim 2, **characterized in that** the diameter of the tank body of the pressure stabilizing buffer tank is D₁;
the distance between the vertical baffle and the vertical shaft axis of the pressure stabilizing buffer tank is D₁/6, and the plate length L is 5D₁/4;
the pore diameter d₁ of the micro-hole inclined baffle is 10 mm; the hole diameter d₂ of the small-hole inclined baffle is 30 mm; the pore diameter d₃ of the large-hole inclined baffle is 60 mm; the included angle between a single inclined baffle and the horizontal plane is 60°, and the spacing between each inclined baffle is D₁/6;
the pore diameter d₄ of the outflow small-hole transverse baffle is 30 mm, and the pore diameter d₅ of the outflow large-hole transverse baffle is 30 mm; and the spacing between the outflow small-hole transverse baffle and the outflow large-hole transverse baffle is D₁/4.

4. The treatment device according to claim 1, **characterized in that** the primary tubular dissolved air releaser and the secondary tubular dissolved air releaser both have a tubular multi-stage Venturi series structure; and the number of series stages of the Venturi tubes is controlled to be 2-5.

5. The treatment device according to claim 1, **characterized in that** the high-pressure vertical cyclone floating device comprises a main separation tank, and the diameter of the tank body is D₂; an oil overflow cover, an oil collecting cylinder and an evenly distributed cyclone inlet are successively provided from top to bottom in the main separation tank; the evenly distributed cyclone inlet extends to the outside of the main separation tank and is connected to the water inlet pipeline;
the upper part of the side wall of the main separation tank is provided with an oil outlet, and the bottom of the orifice of the oil outlet is tangentially connected to the bottom surface of the oil overflow cover;
an air outlet is provided at the top of the main separation tank;
a slag discharge port is provided at the axial center of the bottom of the main separation tank; and a liquid outlet is provided at the bottom of the main separation tank at a distance of D₂/8 from the shaft axis.

6. The treatment device according to claim 1, **characterized in that** the low-pressure vertical shallow air flotation device comprises a main separation tank, and the diameter of the tank body is D₃;
an oil overflow cover, an oil collecting inclined plate and a hollow cone platform are successively provided from top to bottom in the main separation tank;
the oil collecting inclined plate is composed of a plurality of hollow cone-shaped inclined plates stacked up and down; the included angle between the inclined angle of a single inclined plate and the horizontal plane are optimally set at 60°-65°; the diameter of the large end of the inclined plate is 0.7-0.9 times the inner diameter D₃ of the tank body of the low-pressure vertical shallow air flotation device; the diameter of the small end of the inclined plate is 0.3-0.5 times the inner diameter D₃ of the tank body of the low-pressure vertical shallow air flotation device; the vertical interval of the inclined plate is controlled at 40 mm-100 mm, and the number of the inclined plates is set at about 6-10 pieces;
an evenly distributed outlet is provided above and a flow equalizing plate is provided below the interior of the hollow cone platform;
the bottom axis of the hollow cone platform is provided with a slag discharge port, and extends to the outside of the bottom of the main separation tank;
an air outlet is centrally provided at the top of the main separation tank;
the upper part of the side wall of the main separation tank is provided with an oil outlet, and the bottom of the oil outlet is connected to a ground tangent plane of the oil overflow cover;
the lower part of the side wall of the main separation tank is provided with a liquid inlet, which is horizontally connected to the evenly distributed outlet; and
the bottom end of the main separation tank is provided with a liquid outlet.

7. A method for treating gas-bearing oilfield produced water by the treatment device of any one of claims 1-6, **characterized by** comprising the steps of:
S1, subjecting the gas-bearing oilfield produced water to pressure stabilization in the pressure stabilization buffer tank, and after pressure stabilization treatment, adding a medicament and putting the mixture to the primary tubular dissolved air releaser;
S2, decompressing and releasing the dissolved gas in the gas-bearing oilfield produced water in the primary tubular dissolved air releaser to form microbubbles, and then filling the produced water rich in microbubbles into the high-pressure vertical cyclone floating device to generate a cyclone flow via an evenly distributed outlet;
wherein during the flow process, the microbubbles, together with the oil droplets and the solid suspension, form an "oil droplet-bubble adhesive body" and a "solid suspension-bubble adhesive body", which move towards the center and float upwards through the oil outlet to the slop oil tank under the action of the cyclone centrifugal force; the gas phase is discharged into a gas transmission pipeline via the gas outlet; the solid phase settles and is discharged from the slag discharge port; the separated produced water enters the secondary tubular dissolved air releaser;
S3, releasing the produced water obtained from the treatment in the step S2 under reduced pressure in the secondary tubular dissolved air releaser, and producing a group of microbubbles for the second time, and filling the produced water rich in the group of microbubbles to the low-pressure vertical shallow air flotation device, the same flowing uniformly under the action of the flow equalizing plate;
wherein, during the flow process, the microbubble group collides with the oil droplet and the solid suspension to form an "oil droplet-bubble adhesive body" and a "solid suspension-bubble adhesive body", and the oil droplet aggregates, coalesces and segregates under the action of shallow settlement; the treated enriched oil phase is discharged to the slop oil tank via the oil outlet; the gas phase is discharged to the gas transmission pipeline via the gas outlet; the solid phase settles and is discharged from the slag discharge outlet; and the treated produced water flows out of the liquid outlet and into the water outlet pipeline.

8. The method according to claim 7, **characterized in that**, in the step S1, the hydraulic retention time in the pressure stabilizing buffer tank is controlled to be above 30 min, and the water pressure is 0.50-0.6 MPa; and
the medicament is one of PAC, PAM, and a water clarifier.

9. The method according to claim 7, **characterized in that**, in the step S2, the water pressure of the outlet pipe section of the primary tubular dissolved air releaser is controlled to 0.30-0.35 MPa.

10. The method according to claim 7, **characterized in that**, in the step S3, the water pressure of the outlet pipe section of the secondary tubular dissolved air releaser is controlled to 0.10-0.15 MPa.
